# EUROPÄISCHE PATENTANMELDUNG

(11) **EP 3 904 483 A1**
(43) Veröffentlichungstag der Anmeldung: **03.11.2021**
(21) Anmeldenummer: 21170850.8
(22) Anmeldetag: 28.04.2021
(51) Int. Cl.: C09K 3/10, F16J 1/01, C08L 27/16, C08K 7/00

(54) **KURZFASER-VERSTÄRKTES FLUORKAUTSCHUK-WEICHSTOFFDICHTUNGSMATERIAL, AUS DIESEM HERGESTELLTE WEICHSTOFFDICHTUNG SOWIE HERSTELLUNGSVERFAHREN EINER WEICHSTOFFDICHTUNG**

(30) Priorität: 29.04.2020 DE 202020102395 U
(71) Anmelder: Frenzelit GmbH, 95460 Bad Berneck (DE)
(72) Erfinder: WILL, Andreas, 95686 Fichtelberg (DE); Dr. BERGER, Anna, 95493 Bischofsgrün (DE); KEMNITZER, Theresa, 95195 Röslau (DE)
(74) Vertreter: Becker, Eberhard

(57) **Zusammenfassung**

Es werden ein kurzfaser-verstärktes Fluorkautschuk-Weichstoffdichtungsmaterial, eine Weichstoffdichtung und ein entsprechendes Herstellungsverfahren bereitgestellt. Das kurzfaser-verstärktes Fluorkautschuk-Weichstoffdichtungsmaterial umfasst mindestens 20, bevorzugt mindestens 40 Gew.-% Fluorkautschuk; mindestens 20 Gew.-% von mindestens einem Pulver- oder Granulat-förmigen Füllstoffs; und mindestens 5 Gew.-% Fasern. Die Herstellung der Weichstoffdichtung aus dem kurzfaser-verstärktes Fluorkautschuk-Weichstoffdichtungsmaterial erfolgt bevorzugt durch Kalandern.

## Beschreibung

### Gebiet der Erfindung

Die vorliegende Erfindung betrifft ein Kurzfaser-verstärktes Fluorkautschuk(FKM)-Weichstoffdichtungsmaterial, im Folgenden auch kurz "erfindungsgemäßes Material", eine aus diesem erfindungsgemäßen Material hergestellte Weichstoffdichtung sowie ein Herstellungsverfahren einer Weichstoffdichtung aus diesem erfindungsgemäßen Material. Das erfindungsgemäße Material kann als homogenes Basismaterial für Weichstoffdichtungen, insbesondere eine statische Flachdichtung dienen, ohne dass zusätzliche Beschichtungen oder verstärkende Einlagen hinzugefügt werden müssen. Das Material kann ferner besonders einfach durch Kalandern bzw. Kalanderwalzen in die gewünschte Dicke gebracht und durch anschließendes Stanzen oder Schneiden zum fertigen Produkt geformt werden. Zudem weist das erfindungsgemäße Material hohe thermische und chemische Resistenzen auf, was in vielen Flachdichtungseinsatzgebieten, insbesondere für Rohrflanschdichtungen oder Zylinderkopfdichtungen, sehr wünschenswert und teilweise gesetzliche Vorschrift ist. Die fertige Dichtung neigt nicht zum Kriechen, also der langsamen Verdrängung des Dichtungsmaterials.

### Beschreibung des Standes der Technik

Herkömmliche polymerbasierte Flachdichtungen können als reine Polymerdichtungen, als faserverstärkte Weichstoffdichtungen oder als Kompositmaterial hergestellt werden. Reine Polymerdichtungen, z.B. PTFE-Dichtungen, neigen unter hohen Drücken zum so genannten Kriechen, also der allmählichen Verdrängung des Dichtungsmaterials unter Druck und/oder Temperatur, was die Dichtwirkung entweder durch Verlust der Flächenpressung (Schraubendehnung geht verloren) oder einfach mit der Zeit verschlechtern kann. Dies macht ein regelmäßiges Nachspannen bzw. Nachziehen der Dichtungsverbindung (z.B. von Flanschbolzen) erforderlich, damit ein gleichmäßiger Verpressungsdruck und zuverlässige Dichtung der abgedichteten Verbindungsstelle gewährleistet werden kann. Schließlich muss die Dichtung durch eine neue ersetzt werden. Komposit-Dichtungen kombinieren die vorteilhaften Eigenschaften der Komponenten, insbesondere die Zug- und Reißfestigkeit des Faseranteils mit den guten Dichteigenschaften eines Elastomers, und neigen daher auch weniger zum Kriechen. Ebenso wurden bereits faserverstärkte Polymerdichtungen, beispielsweise faserverstärkte NBR-/ HNBR-/ SBR-/NR-Weichstoffdichtungen entwickelt, um den negativen Fließeigenschaften reiner Polymerdichtungen entgegenzuwirken.

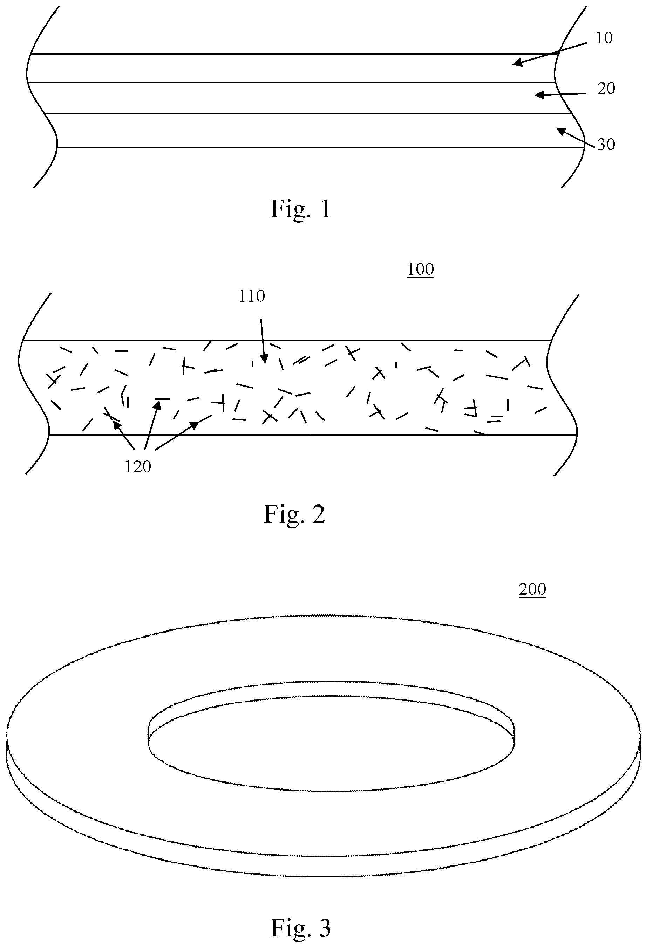

Fig. 1 zeigt einen Querschnitt durch einen Schichtaufbau einer herkömmlichen Kompositmaterial-Flachdichtung. Eine solche herkömmliche Dichtung besteht beispielsweise aus einer Polymerlage 20, einer Gewebelage 30 und einer Beschichtung 10. Zwischen den Lagen sind Verbindungsmittel vorgesehen, um die einzelnen Lagen zusammenzuhalten. Durch die Kombination der Lagen können die negativen Eigenschaften der Lagen durch positive Eigenschaften der anderen Lagen teilweise ausgeglichen werden. Jedoch haben bekannte Kompositstoffe eine relativ komplexe Struktur und müssen in abgestimmten Verfahren schichtweise aufgebaut werden. Die Notwendigkeit einer sicheren Verbindung der Schichten bei gleichzeitiger hoher Dichtperformance stellt hohe Anforderungen an den Entwurf neuer Werkstoffe. Zudem sind die notwendigen Stoffe teils teuer und das Herstellungsverfahren komplex und langwierig. Es besteht daher ein Bedarf nach simpleren Zusammensetzungen, die in einem einfach zu steuernden Verfahren in die gewünschte Form gebracht werden können ohne die Nachteile herkömmlicher reiner Polymerdichtungen in Kauf nehmen zu müssen.

Zudem ist allen bekannten Polymerweichstoffdichtungen gemein, dass die verwendeten Polymere in bestimmten chemischen Milieus und/oder bei hohen Temperaturen und Temperaturschwankungen schnell ihre positiven Eigenschaften verlieren. Es ist daher wünschenswert eine herkömmliche Polymerkomponenten durch chemisch und thermisch resistentere Stoffe zu ersetzen ohne dabei zu starke Einbußen in der Dichtleistung hinnehmen zu müssen.

Als Kandidat für eine geeignete Stoffklasse kommt Fluorkautschuk bzw. Fluorkohlenstoffelastomere, FKM, in Betracht. FKM sind eine wichtige Klasse von industriellen Polymeren aufgrund ihrer einzigartigen inhärenten Eigenschaften. Sie sind speziell dafür bekannt, ihre Dehnungs- und Zugfestigkeitseigenschaften unter extremen chemischen und thermischen Bedingungen beizubehalten. FKM finden Verwendung als Dichtungs-O-Ringe, Formkörper und extrudierte Gegenstände, wobei die resultierenden Gegenstände auf Basis von FKM in Hochtemperaturanwendungen oder in Anwendungen, in denen der Gegenstand harschen chemischen Bedingungen ausgesetzt ist, verwendet werden. Insbesondere werden FKM im Allgemeinen verwendet, um Automobilkomponenten, wie z.B. Motoröldichtungen, Kraftstoffleitungen, verschiedene O-Ringe, Antriebsstrangdichtungen und andere Komponenten, die ihre Eigenschaften beibehalten müssen, wenn sie in Kontakt mit den Betriebsbedingungen von Verbrennungsmotoren stehen, abzudichten.

Die Anwendungen für FKM sind in vielen Fällen jedoch durch Mangel an gewissen physikalische Eigenschaften, wie z. B. Fließtemperaturflexibilität oder Modulus und niedrigen Durometer beschränkt. Eine Anwendung für Flachdichtungen, etwa im Bereich von mechanisch, chemisch und thermisch hoch beanspruchten Flanschverbindungen oder in Zylinderkopfdichtungen, kam daher bislang nicht in Betracht. Zudem ist die Verarbeitung von FKM zu dünnen Lagen nur unter erheblichen Aufwand möglich und einfache Herstellungsverfahren, wie Kalandern (insbesondere Heißkalandrieren), kommen aufgrund der zähen und federnden Konsistenz für FKM nicht in Frage.

Die vorliegende Erfindung stellt daher ein neuartiges Kurzfaser-verstärktes Fluorkautschuk-Weichstoffdichtungsmaterial bereit, das die Dichteigenschaften herkömmlicher Komposit-Flachdichtungen voll erfüllen kann und zugleich dem einfachen Kalanderwalzverfahren zugänglich ist. Die so gewonnene Dichtung ist durch die einfache Herstellung kostengünstig und für Einsatzgebiete geeignet, in denen FKM basierte homogene Dichtungen bisher nicht denkbar waren. Wenn in der nun folgenden Beschreibung von einer "Weichstoffdichtung" die Rede ist, sind insbesondere Dichtungen nach DIN 2690, DIN EN 1514 (z.B. DIN EN 1514-1 IBC), DIN EN 12560, DIN 28040 bzw. DIN 86071 gemeint. Alternative Einsatzgebiete sind jedoch ebenfalls möglich.

### Kurze Beschreibung der Erfindung

Die vorliegende Erfindung wird durch die Ansprüche definiert. Die folgende Beschreibung dient dem leichteren Verständnis der Erfindung.

In einer Ausführungsform der Offenbarung wird ein Kurzfaser-verstärktes Fluorkautschuk-Weichstoffdichtungsmaterial bereitgestellt, das umfasst: mindestens 20, bevorzugt mindestens 40 Gew.-% Fluorkautschuk; mindestens 20 Gew.-% von mindestens einem Pulver- oder Granulat-förmigen Füllstoffs; und mindestens 5 Gew.-% Fasern. Bei geringeren Anteilen an Fluorkautschuk ist das Dichtungsmaterial zu spröde.

Dieses neuartige Material dient vornehmlich als Basismaterial für Weichstoffdichtungen, die eine höhere Temperatureinsatzgrenze und bessere chemische Beständigkeit als bisherige elastomergebundene Weichstoffdichtungen aufweisen. Dieses Material weist zudem durch die eingebrachte Kurzfasern eine hohe mechanische Stabilität, sowohl bei Raumtemperatur, als auch unter Temperatureinwirkung auf, wodurch eine aus dem Material hergestellte Dichtung anderen Elastomeren, z.B. Gummi oder PTFE, überlegen ist, wie sie üblicherweise in thermisch/chemisch anspruchsvollen Einsatzgebieten verwendet werden. Beispielsweise bleibt der Fluorkautschuk in dem Material auch unter Einwirkung von Temperatur bis zu 300 °C flexibler als bisherige elastomergebundene Weichstoffdichtungen und es tritt keine Versprödung durch Temperatureinwirkung ein. Zudem neigt das erfindungsgemäße Material nicht zum Kriechen, wie bisher verbreitete Dichtungen (gefülltes PTFE). Dem Material sind diese positiven Eigenschaften inhärent, so dass keine Kombination mit weiteren Lagen notwendig ist, um eine vorteilhafte Weichstoffdichtung zu erhalten, was wiederum eine vereinfachte Herstellung der Dichtung ermöglicht.

In einer bevorzugten Ausführungsform der Offenbarung besteht das Kurzfaser-verstärktes Fluorkautschuk-Weichstoffdichtungsmaterial aus Fluorkautschuk, einem oder mehreren Füllstoffen und Fasern in den angegebenen Gewichtsprozentteilen.

Durch die abschließende Formulierung wird eine besonders einfache aber effektive Zusammensetzung erhalten. Die erleichtert die Auswahl der Dichtung bei der Beurteilung der chemischen Resistenz der enthaltenen Komponenten. Während der Herstellung des Materials werden neben den Ausgangsstoffen Fluorkautschuk, Füllstoff(en) und Fasern lediglich ein Lösungsmittel bzw. eine Lösungsmittelmischung zum Quellen des Fluorkautschuk sowie ein Vernetzungsmittel zugemischt. Das Vernetzungsmittel wird während der Vernetzung vollständig umgesetzt während das Lösungsmittel während der Herstellung (insbesondere während des Kalandrierens) aus dem Material ausgetrieben wird.

In einer bevorzugten Ausführungsform der Offenbarung enthält das Kurzfaserverstärkte Fluorkautschuk-Weichstoffdichtungsmaterial nicht mehr als 75 Gew.-% Fluorkautschuk, nicht mehr als 60, bevorzugt nicht mehr als 40 Gew.-% Pulver- oder Granulat-förmiger Füllstoffe und/oder nicht mehr als 20 Gew.-% Fasern. Die Summe der Prozentanteile ergibt dabei stets 100, so dass ein höherer Anteil an Fasern durch einen entsprechend niedrigeren Anteil von Füllstoffen und/oder Fluorkautschuk ausgeglichen werden muss usw. Dieses Material für Weichstoffdichtungen ermöglicht es, die oben beschriebene höhere Temperatureinsatzgrenze und bessere chemische Beständigkeit als bisherige elastomergebundene Weichstoffdichtungen weiter zu verbessern. Die eingebrachten Kurzfasern erhöhen die mechanische Stabilität ohne die Struktur des Materials zu stören, etwa ein Zerfasern zu fördern. Dem Material sind diese positiven Eigenschaften inhärent, so dass keine Kombination mit weiteren Lagen notwendig ist, um eine vorteilhafte Weichstoffdichtung zu erhalten, was wiederum eine vereinfachte Herstellung der Dichtung, bevorzugt durch Kalandern/Heißkalandrieren ermöglicht.

In einer bevorzugten Ausführungsform der Offenbarung ist der Fluorkautschuk ausgewählt aus der Gruppe, bestehend aus FKM-Copolymer, FKM-Terpolymer, FKM-Tetrapolymer, FKM-hochfluoriert, Perfluorkautschuk und Mischungen daraus.

In einer bevorzugten Ausführungsform der Offenbarung ist der mindestens eine Pulver- oder Granulat-förmige Füllstoff ausgewählt aus der Gruppe, bestehend aus: Quarz, Glimmer, Kieselerden, Kaoline, Kieselsäure, Bariumsulfat, Wollastonit, Baryt, Diatomeen, Talkum, Bornitrid, Metalloxide, Graphit, Alkalisalze und Erdalkalisalze oder Mischungen daraus.

In einer bevorzugten Ausführungsform der Offenbarung sind die Fasern organische oder anorganische Kurzfasern und besonders bevorzugt ausgewählt aus der Gruppe, bestehend aus Glasfasern, Silikatfasern, Kohlenstofffasern, Basaltfasern, Aramidfasern, PPS-Fasern, PET-Fasern, PA-Fasern oder Mischungen daraus.

In einer bevorzugten Ausführungsform der Offenbarung weisen die Fasern eine Länge von 0,5 - 60 mm, bevorzugt 1-40 mm, und einen Faserdurchmesser von 4-30 µm, bevorzugt 8 - 25µm, auf. Längere Fasern und/oder größerer Durchmesser führen dazu, dass die Fasern nicht mehr homogen eingebracht werden können und keine 3-dimensionale (multidimensionale) einheitliche Ausrichtung sichergestellt werden kann. Bei kürzeren Fasern leidet die zu erzielende mechanische Stabilität.

In einer bevorzugten Ausführungsform der Offenbarung wird eine Weichstoffdichtung bereitgestellt, die ein Kurzfaser-verstärkten Fluorkautschuk-Weichstoffdichtungsmaterial gemäß den obigen Ausführungsformen der Offenbarung umfasst, bevorzugt aus diesem besteht.

Die so erhaltene Weichstoffdichtung ist besonders für den Einsatz in industriellen Anwendungen, beispielsweise industrielle Rohrflanschverbindungen nach DIN EN 1092, DIN 2690, DIN EN 1514, DIN EN 12560, DIN 28040 bzw. DIN 86071 geeignet. Dies sollte jedoch nicht als abschließende Einschränkung der möglichen Einsatzgebiete verstanden werden. Die Weichstoffdichtung ist weiterhin auch für ungenormte Dichtungsgeometrien geeignet bzw. denkbar. Solche Dichtungen müssen regelmäßig hohen Drücken, Temperaturen und schwierigen chemischen Umgebungen (durch die in den Rohren geleiteten Fluide) widerstehen können. Eine aus dem erfindungsgemäßen Material hergestellte Dichtung erfüllt solche hohen Ansprüche ohne zusätzliche Kompositlagen, Beschichtungen und/oder Bördelungen.

In der Offenbarung wird ein Herstellungsverfahren für eine Weichstoffdichtung bereitgestellt, das nicht Teil des vorliegenden Gebrauchsmusters ist. Das Herstellungsverfahren umfasst Bereitstellen einer Stoffmischung umfassend mindestens 20, bevorzugt mindestens 40 Gew.-% Fluorkautschuk, mindestens 20 Gew.-% eines oder mehrerer Pulver- oder Granulat-förmiger Füllstoffe und mindestens 5 Gew.-% Fasern und Überführen der Stoffmischung in eine homogene Weichstoffdichtungsausgangsmasse; Kalandern der Weichstoffdichtungsausgangsmasse auf eine gewünschte Dicke; und Ausstanzen oder Ausschneiden der so erhaltenen kalanderten Weichstoffdichtungsausgangsmasse, um eine fertige Weichstoffdichtung zu erhalten. Weitere Eigenschaften und Vorteile der im Verfahren verwendeten Stoffzusammensetzung sind der obigen Beschreibung in Paragraphen [0010]-[0017] zu entnehmen.

Herkömmliche FKM-Werkstoffe zur Herstellung von Dichtungen waren Kalander-Prozessen aufgrund der elastischen und klebrigen Konsistenz von FKM gänzlich unzugänglich. FKM Dichtungen wurden entsprechend in der Regel durch extrudieren bzw. Strangpressen gefertigt. Diese Verfahren sind wiederrum nicht zur Herstellung von Flachdichtungen, beispielsweise für Flanschverbindungen im industriellen Umfeld, geeignet.

Die gewünschte Dicke, auf die das Material kalandert wird, kann zwischen 0,2 - 10 mm, bevorzugt 0,5 - 8 mm betragen. Diese Dickenbereiche war bisherigen Polymerdichtungen, z.B. gefüllten PTFE-Dichtungen unzugänglich, da solche Materialien unterhalb von 1 mm Dicke nicht die erforderliche Maßhaltigkeit bezüglich der Dickentoleranz aufweisen.

In dem Herstellungsverfahren kann das Bereitstellen einer Stoffmischung ferner umfassen: Bereitstellen des Fluorkautschuks, der einem oder mehrere Füllstoffe und der Fasern; Hinzufügen eines Lösungsmittels zum Quellen des Fluorkautschuks; Mischen der Komponenten mit dem Lösungsmittel bei einer ersten definierten Temperatur bis eine homogene Mischung entsteht und die Fasern gleichmäßig ausgerichtet sind; und Abkühlen der Mischung auf eine zweite definierte Temperatur. Das Lösungsmittel kann natürlich auch eine Lösungsmittel-Mischung sein. Beispiele für geeignete Lösungsmittel sind Ethanol, Essigsäureethylester oder MEK. Die Auswahl eines geeigneten Lösungsmittels und einer Menge des Lösungsmittels sind dem Fachmann wohl bekannte Vorgänge und sollen in der vorliegenden Erfindung nicht beschränkt werden.

In dem Herstellungsverfahren sollte die erste definierte Temperatur nicht mehr als 70°C betragen und die zweite definierte Temperatur liegt vorzugsweise im Bereich von 15°C bis 25°C, besonders bevorzugt bei Raumtemperatur.

Es sollte ferner beachtet werden, dass die Fasern in der vor dem Kalandern erzeugte Weichstoffdichtungsmasse in alle Raumrichtung gleichmäßig und zufällig verteilt ausgerichtet sind. Die Fasern sind insbesondere nicht vernetzt oder in eine bevorzugte Richtung ausgelegt. Während des Kalanderns werden die Fasern durch das Auswalzen in einem gewissen Maße in Richtung der Walzenoberfläche(n) gelegt. Dadurch wird die Ausrichtung senkrecht zur Walzenfläche(n) leicht unterdrückt. Die Ausrichtung der Fasern bleibt jedoch auch im fertig kalandrierten Material zufällig verteilt, wobei die Faserausrichtung in Dickenrichtung des fertig kalandrierten Materials anteilsmäßig etwas unterdrückt ist. Eine Vernetzung oder sonstige Verknüpfung der Fasern findet jedoch auch bei sehr dünnen Lagendicken nicht statt und ist auch in der fertigen Weichstoffdichtung nicht zu beobachten.

In dem Herstellungsverfahren kann das Kalandern mit folgenden Parametern durchgeführt werden:
Kalandriergeschwindigkeit 0,5-70 m/min, bevorzugt 2-50 m/min;
Kalandertemperatur 130-200 °C, bevorzugt 135-185°C; und
Kalandrierdrücke 5-50 MPa, bevorzugt 10-45 MPa, wobei das Kalandern schrittweise über mehrere Kalanderwalzen erfolgt, bis das Material die gewünschte Dicke aufweist.

Die Erwärmung auf die Kalandertemperatur kann extern, z.B. durch beheizte Kalanderwalzen oder durch vorheriges Erwärmen der homogene Mischung erfolgen. Es sei jedoch angemerkt, dass auch der Kalanderprozess selbst eine gewisse Wärme in der Mischung erzeugt.

In dem Herstellungsverfahren können die Kalandrierdrücke der einzelnen Kalanderschritte stufenweise zunehmen und die Kalandriergeschwindigkeiten der einzelnen Kalanderschritte stufenweise abnehmen.

In dem Herstellungsverfahren wird Lösungsmittel beim Kalandern bevorzugt vollständig (innerhalb üblicher Toleranzen) aus dem Material ausgetrieben. Daher bleiben in der fertigen Weichstoffdichtung kaum Lösungsmittelrückstände, die die Dichtleistung oder Einsatz in anspruchsvollen Gebieten (Nahrungsmittelindustrie, Arzneimittelherstellung etc.) verhindern könnten.

In dem Herstellungsverfahren umfasst das Bereitstellen einer Stoffmischung bevorzugt Hinzufügen eines Vernetzungsmittels, wobei die Vernetzung während des anschließenden Kalanderns durch diaminische, peroxidische oder bisphenolische Vernetzung erfolgt und das Vernetzungsmittel dabei (innerhalb üblicher Toleranzen) vollständig umgesetzt wird. Die vollständige Umsetzung wird dabei durch genaues Abstimmen der Vernetzungsmittelmenge hinsichtlich der zu vernetzenden Stoffe gewähleistet.

Durch das Herstellungsverfahren wird die Ausrichtung der Fasern in der homogenen Weichstoffdichtungsausgangsmasse zufallsverteilt und die Fasern werden nicht verknüpft. Die homogene Verteilung der Fasern dient der mechanischen Stabilität in alle Dimensionen, also wird ein höheres Festigkeitsniveau in allen Beanspruchungsrichtungen erreicht. Dadurch werden zudem auch nicht vorgesehene Beanspruchungen (etwa bei Störungen oder unerwarteten/nicht bedachten Erschütterungen (z.B. Lastwechsel, Druckschläge)) zufriedenstellend gemeistert.

Die vorliegende Offenbarung ist zudem auf eine Weichstoffichtung gerichtet, die durch das oben beschriebene Verfahren gewonnen wurde.

### Kurze Beschreibung der Zeichnungen

Die begleitenden Zeichnungen sind umfasst, um das Verständnis der Erfindung zu erleichtern und sind eingearbeitet in und stellen eine Teil dieser Beschreibung dar. Die Zeichnungen stellen exemplarische Ausführungsformen der Erfindung bereit und dienen, zusammen mit der Beschreibung, zur Erklärung der Grundlagen der Erfindung.
Fig. 1 zeigt einen Querschnitt durch einen Schichtaufbau einer herkömmlichen Kompositmaterial-Flachdichtung.
Fig. 2 zeigt einen Querschnitt durch eine Lage des erfindungsgemäßen Materials.
Fig. 3 ist eine Perspektivansicht einer Flachdichtung für Flansche, wie sie aus dem erfindungsgemäßen Material durch Kalandern und Stanzen hergestellt werden kann.

### Ausführliche Beschreibung der Ausführungsformen

Im Folgenden wird die vorliegende Offenbarung anhand von Figuren beschrieben, die schematisch verschiedene beispielhafte Ausführungsformen zeigen. Die in den Figuren dargestellten Ausführungsformen sind nicht zwangsläufig maßstabgerecht dargestellt und es können zum Teil Abmessungen gewählt sein, die das Prinzip der vorliegenden Erfindung klarer zur Geltung bringen. Es werden sowohl in der Zeichnung als auch in der Beschreibung gleiche oder ähnliche Bezugszeichen für gleiche oder ähnliche Elemente und Komponenten verwendet. Alle gezeigten und beschriebenen Ausführungsformen sind untereinander ganz oder teilweise kombinierbar, sofern nicht explizit etwas anderes angegeben ist.

Fig. 2 zeigt einen Querschnitt durch eine Lage des erfindungsgemäßen Materials. Fig. 3 ist eine Perspektivansicht einer Flachdichtung 200 für Flansche, wie sie aus dem erfindungsgemäßen Material durch Kalandern und Stanzen hergestellt werden kann. Mit Bezug auf Fig. 3 handelt es sich bei der Weichstoffdichtung 200, die aus einem erfindungsgemäßen kurzfaser-verstärkten FKM-Weichstoffdichtungsmaterial hergestellt werden kann, vorzugsweise um eine Rohrflanschdichtung, etwa gemäß DIN EN 1519, DIN EN 1514 oder DIN EN 12560. Die Dichtung 200 der Fig. 3 ist bevorzugt homogen aufgebaut und besteht komplett aus dem erfindungsgemäßen Material (abgesehen von Typbeschriftungen oder dergleichen). In anderen Ausführungsformen der Erfindung kann die Dichtung 200 jedoch zusätzlich mit Innen- und/oder Außenbördeln versehen werden (nicht gezeigt), was in einigen Anwendungsgebieten gesetzlich vorgeschrieben ist.

Der Querschnitt 100 der Fig. 2 kann beispielsweise als Querschnitt durch ein Abschnitt des erfindungsgemäßen Materials 100, aus dem eine Weichstoffdichtung hergestellt werden kann, verstanden werden. Gleichermaßen kann es sich bei Fig. 2 auch um einen Querschnitt durch eine erfindungsgemäße, fertige Dichtung 200 (Fig. 3) oder durch eine Materiallage nach oder während eines Kalandrierprozesses handeln.

Der Querschnitt durch das Material 100 zeigt eine FKM-basierte Matrix 110 und in diese Matrix 110 eingebettete Fasern 120. Die Fasern 120 sind in der Matrix homogen und zufällig verteilt. Die Ausrichtung der Fasern 120 ist ebenfalls zufällig. Wie in Fig. 2 zu erkennen ist, sind die Fasern Kurzfasern mit einer Länge im Bereich von 0,5 - 60 mm, bevorzugt 1-40 mm, besonder bevorzugt 4-25 mm und einen Faserdurchmesser von 4 - 30 µm, bevorzugt 8 - 25µm, besonders bevorzugt 12 - 20 µm. Die Fasern sind weder untereinander noch mit anderen Bestandteilen des Materials 100 vernetzt oder verknüpft. Die FKM-basierte Matrix 110 umfasst mindestens 20 Gew.-% Fluorkautschuk und mindestens 20 Gew.-% von mindestens einem Pulver- oder Granulat-förmigen Füllstoff. In einer bevorzugten Ausführungsform besteht das Material 100 aus Fluorkautschuk, einem oder mehreren Füllstoffen und den Fasern 120.

Das erfindungsgemäße kurzfaser-verstärktes Fluorkautschuk-Weichstoffdichtungsmaterial 100 in der Ausführungsform der Fig. 2 enthält bevorzugt nicht mehr als 75 Gew.-% Fluorkautschuk, nicht mehr als 60 Gew.-% Pulver- oder Granulat-förmiger Füllstoffe und nicht mehr als 20 Gew.-% Fasern.

Das erfindungsgemäße kurzfaser-verstärktes Fluorkautschuk-Weichstoffdichtungsmaterial 100 in der Ausführungsform der Fig. 2 enthält einen Fluorkautschuk, der ausgewählt ist aus der Gruppe, bestehend aus FKM-Copolymer, FKM-Terpolymer, FKM-Tetrapolymer, FKM-hochfluoriert, Perfluorkautschuk und Mischungen daraus.

Das erfindungsgemäße kurzfaser-verstärktes Fluorkautschuk-Weichstoffdichtungsmaterial 100 in der Ausführungsform der Fig. 2 enthält mindestens einen Pulver- oder Granulat-förmige Füllstoff, der ausgewählt ist aus der Gruppe, bestehend aus: Quarz, Glimmer, Kieselerden, Kaoline, Kieselsäure, Bariumsulfat, Wollastonit, Baryt, Diatomeen, Talkum, Bornitrid, Metalloxide, Graphit, Alkalisalze und Erdalkalisalze oder Mischungen daraus.

Das erfindungsgemäße kurzfaser-verstärktes Fluorkautschuk-Weichstoffdichtungsmaterial 100 in der Ausführungsform der Fig. 2 enthält als Fasern 120 bevorzugt organische oder anorganische Kurzfasern 120 und besonders bevorzugt ausgewählt sind aus der Gruppe, bestehend aus Glasfasern, Silikatfasern, Kohlenstofffasern, Basaltfasern, Aramidfasern, PPS-Fasern, PET-Fasern, PA-Fasern oder Mischungen daraus.

In einer weiteren, bevorzugten Ausführungsform der Erfindung ist das erfindungsgemäße Material 100 der Fig. 2 ausschließlich aus den drei Komponenten Fluorkautschuk, Pulver- oder Granulat-förmiger Füllstoff(e), aus denen die Matrix 110 der Fig. 2 besteht, und Fasern 120 aufgebaut.

### Beispiele

Ein erstes explizites Beispiel für einen Weichstoffdichtungsherstellungsprozess mit Kalandrierprozess wird im Folgenden beschrieben. Zunächst wird eine Stoffmischung bereitgestellt. Die Stoffmischung besteht aus 30 Gew.-% FKM-Copolymer, 50 Gew.-% Füllstoffe, bestehend aus 30 Gew.-% Kieselgur und 20 Gew.-% Bariumsulfat-Pulver, und 20 Gew.-% Kohlenstofffasern mit einem Durchmesser von 8µm und einer durchschnittlichen Länge von 6mm. Der Stoffmischung wird eine Ethanol-basierte Mischung, die Ethanol, Ethylacetat und MEK enthält, als Lösungsmittel zum Quellen (Verhältnis zur Trockenmasse 1:1) des FKM und blockierte Diamine als Vernetzungsmittel zugegeben. Das Ergebnis wird solange bei 60°C gemischt, bis eine homogene Masse entsteht und die Fasern gleichmäßig (zufällig) verteilt und ausgerichtet sind. Die homogene Masse wir anschließend auf Raumtemperatur (20°C) abgekühlt und der Kalanderprozess gestartet, wie er weiter unten beschrieben wird.

Ein zweites explizites Beispiel für einen Weichstoffdichtungsherstellungsprozess mit Kalandrierprozess wird im Folgenden beschrieben. Zunächst wird eine Stoffmischung bereitgestellt. Die Stoffmischung besteht aus 50 Gew.-% FKM-Copolymer, 35 Gew.-% Füllstoffe, bestehend aus 25% Diatomeen, 5 Gew.-% Metalloxiden und 5 Gew.-% Quarzpulver, und 15 Gew.-% Aramidfasern mit einem Durchmesser von 10µm und einer durchschnittlichen Länge von 2mm. Der Stoffmischung wird eine Ethanol-basierte Mischung, die Ethanol, Ethylacetat und MEK enthält, als Lösungsmittel zum Quellen (Verhältnis zur Trockenmasse 1:1) des FKM und blockierte Diamine als Vernetzungsmittel zugegeben. Das Ergebnis wird solange bei 60°C gemischt, bis eine homogene Masse entsteht und die Fasern gleichmäßig (zufällig) verteilt und ausgerichtet sind. Die homogene Masse wir anschließend auf Raumtemperatur (20°C) abgekühlt und der Kalanderprozess gestartet, wie er weiter unten beschrieben wird.

Ein drittes explizites Beispiel für einen Weichstoffdichtungsherstellungsprozess mit Kalandrierprozess wird im Folgenden beschrieben. Zunächst wird eine Stoffmischung bereitgestellt. Die Stoffmischung besteht aus 68 Gew.-% FKM-Copolymer, 22 Gew.-% Füllstoffe, bestehen aus 12 Gew.-% Quarzpulver, 10 Gew.-% Bariumsulfat-Pulver, und 10 Gew.-% E-Glasfasern mit einem Durchmesser von 10µm und einer durchschnittlichen Länge von 4mm. Der Stoffmischung wird eine Ethanol-basierte Mischung, die Ethanol, Ethylacetat und MEK enthält, als Lösungsmittel zum Quellen (Verhältnis zur Trockenmasse 1:1) des FKM und blockierte Diamine als Vernetzungsmittel zugegeben. Das Ergebnis wird solange bei 60°C gemischt, bis eine homogene Masse entsteht und die Fasern gleichmäßig (zufällig) verteilt und ausgerichtet sind. Die homogene Masse wir anschließend auf Raumtemperatur (20°C) abgekühlt und der Kalanderprozess gestartet, wie er weiter unten beschrieben wird.

Generell kommen als Vernetzung eine diaminische, bisphenolische oder peroxidische Vernetzung zum Einsatz, wobei eine diaminische Vernetzung bevorzugt ist. Peroxidische Vernetzung von 1-10 Gew.-% kann alternativ angewandt werden. Die hier als Füllstoff verwendeten Pulver oder Granulate können einen mittleren Korngrößenbereich von ca. 1 µm bis 1 mm aufweisen.

Das Kalandern der Massen aus den oben beschriebenen expliziten Beispielen 1 bis 3 erfolgt kontinuierlich über vier Kalanderschritte, also vier Kalanderwalzenspalteinstellungen, wobei nach dem letzten Schritt die gewünschte Dicke von 2 mm erreicht wird. Für ein solches 2 mm starkes Weichstoffmaterial wird eine Kalandertemperatur, also eine Temperatur der Walze, von 150 °C benötigt. Schritt 1 erfolgt bei 70 m/min und 5 MPa, Schritt 2 bei 50 m/min und 15 MPa, Schritt 3 bei 30 m/min und 25 MPa und Schritt 4 erfolgt bei 20 m/min und 35 MPa. Die homogene Masse wird vor dem Walzspalt des ersten Schritts gleichmäßig verteilt. Die Zudosierung erfolgt solange kontinuierlich bis alle weiteren vier Walzenspalteinstellungen durchlaufen sind.

Nach dem vierten Kalanderschritt wird eine 2 mm dicke faserverstärkte FKM-Weichstoffmaterialplatte gemäß einer Ausführungsform der vorliegenden Erfindung erhalten, wobei das Vernetzungsmittel während des Kalanderns vollständig umgesetzt wurde und das Lösungsmittel im Kalanderprozess vollständig aus dem Material ausgetrieben wurde.

## Patentansprüche

1. Kurzfaser-verstärktes Fluorkautschuk-Weichstoffdichtungsmaterial (100), umfassend:
mindestens 20 Gew.-% Fluorkautschuk;
mindestens 20 Gew.-% von mindestens einem Pulver- oder Granulat-förmigen Füllstoff; und
mindestens 5 Gew.-% Fasern.

2. Kurzfaser-verstärktes Fluorkautschuk-Weichstoffdichtungsmaterial gemäß Anspruch 1, wobei dieses aus Fluorkautschuk, einem oder mehreren Füllstoffen und Fasern besteht.

3. Kurzfaser-verstärktes Fluorkautschuk-Weichstoffdichtungsmaterial gemäß einem der vorstehenden Ansprüche, wobei dieses nicht mehr als 75 Gew.-% Fluorkautschuk enthält, dieses nicht mehr als 60 Gew.-% Pulver- oder Granulat-förmiger Füllstoffe, und/oder dieses nicht mehr als 20 Gew.-% Fasern enthält.

4. Weichstoffdichtung, die ein Kurzfaser-verstärkten Fluorkautschuk-Weichstoffdichtungsmaterial gemäß einem der vorstehenden Ansprüche umfasst, bevorzugt aus diesem besteht.

5. Herstellungsverfahren für eine Weichstoffdichtung gemäß Anspruch 4, umfassend:
Bereitstellen einer Stoffmischung umfassend mindestens 20 Gew.-% Fluorkautschuk, mindestens 20 Gew.-% eines oder mehrerer Pulver- oder Granulat-förmiger Füllstoffe und mindestens 5 Gew.-% Fasern und Überführen der Stoffmischung in eine homogene Weichstoffdichtungsausgangsmasse;
Kalandern der Weichstoffdichtungsausgangsmasse auf eine gewünschte Dicke; und
Ausstanzen oder Ausschneiden der so erhaltenen kalanderten Weichstoffdichtungsausgangsmasse, um eine fertige Weichstoffdichtung zu erhalten.

6. Herstellungsverfahren gemäß Anspruch 5, wobei die gewünschte Dicke 0,2 - 10 mm, bevorzugt 0,5 - 8 mm beträgt.

7. Herstellungsverfahren gemäß einem der Ansprüche 5 oder 6, wobei die Stoffmischung nicht mehr als 75 Gew.-% Fluorkautschuk enthält, die Stoffmischung nicht mehr als 60 Gew.-% Pulver- oder Granulat-förmiger Füllstoffe enthält, und/oder die Stoffmischung nicht mehr als 20 Gew.-% Fasern enthält.

8. Kurzfaser-verstärktes Fluorkautschuk-Weichstoffdichtungsmaterial gemäß einem der Ansprüche 1 bis 3, Weichstoffdichtung gemäß Anspruch 4, oder Herstellungsverfahren gemäß einem der Ansprüche 5 bis 7, wobei der Fluorkautschuk ausgewählt ist aus der Gruppe, bestehend aus FKM-Copolymer, FKM-Terpolymer, FKM-Tetrapolymer, FKM-hochfluoriert, Perfluorkautschuk und Mischungen daraus.

9. Kurzfaser-verstärktes Fluorkautschuk-Weichstoffdichtungsmaterial gemäß einem der Ansprüche 1 bis 3, Weichstoffdichtung gemäß Anspruch 4, oder Herstellungsverfahren gemäß einem der Ansprüche 5 bis 8, wobei der mindestens eine Pulver- oder Granulat-förmige Füllstoff ausgewählt ist aus der Gruppe, bestehend aus: Quarz, Glimmer, Kieselerden, Kaoline, Kieselsäure, Bariumsulfat, Wollastonit, Baryt, Diatomeen, Talkum, Bornitrid, Metalloxide, Graphit, Alkalisalze und Erdalkalisalze oder Mischungen daraus.

10. Kurzfaser-verstärktes Fluorkautschuk-Weichstoffdichtungsmaterial gemäß einem der Ansprüche 1 bis 3, Weichstoffdichtung gemäß Anspruch 4, oder Herstellungsverfahren gemäß einem der Ansprüche 5 bis 9, wobei die Fasern organische oder anorganische Kurzfasern sind und besonders bevorzugt ausgewählt sind aus der Gruppe, bestehend aus Glasfasern, Silikatfasern, Kohlenstofffasern, Basaltfasern, Aramidfasern, PPS-Fasern, PET-Fasern, PA-Fasern oder Mischungen daraus.

11. Kurzfaser-verstärktes Fluorkautschuk-Weichstoffdichtungsmaterial gemäß einem der Ansprüche 1 bis 3, Weichstoffdichtung gemäß Anspruch 4, oder Herstellungsverfahren gemäß einem der Ansprüche 5 bis 10, wobei die Fasern eine Länge von 0,5 - 60 mm, bevorzugt 1-40 mm und einen Faserdurchmesser von 4-30 µm, bevorzugt 8 - 25µm aufweisen.

12. Herstellungsverfahren gemäß einem der Ansprüche 5 bis 11, wobei das Bereitstellen einer Stoffmischung umfasst:
Bereitstellen des Fluorkautschuks, der einem oder mehrere Füllstoffe und der Fasern;
Hinzufügen eines Lösungsmittels zum Quellen des Fluorkautschuks;
Mischen der Komponenten mit dem Lösungsmittel bei einer ersten definierten Temperatur bis eine homogene Mischung entsteht und die Fasern gleichmäßig ausgerichtet sind; und
Abkühlen der Mischung auf eine zweite definierte Temperatur.

13. Herstellungsverfahren gemäß Anspruch 12, wobei das Lösungsmittel ausgewählt ist aus der Gruppe, bestehend aus Ethanol, Essigsäureethylester, Methylethylketon und einer Mischung daraus.

14. Herstellungsverfahren gemäß Anspruch 12 oder 13, wobei die erste definierte Temperatur nicht mehr als 70°C beträgt und die zweite definierte Temperatur im Bereich von 15°C bis 25°C, bevorzugt bei Raumtemperatur liegt.

15. Herstellungsverfahren gemäß einem der Ansprüche 5 bis 14, wobei das Kalandern mit folgenden Parametern durchgeführt wird:
Kalandriergeschwindigkeit 0,5-70 m/min, bevorzugt 2-50 m/min;
Kalandertemperatur 130-200 °C, bevorzugt 135-185°C; und
Kalandrierdrücke 5-50 MPa, bevorzugt 10-45 MPa, wobei das Kalandern schrittweise über mehrere Kalanderwalzen erfolgt, bis das Material die gewünschte Dicke aufweist.

16. Herstellungsverfahren gemäß Anspruch 15, wobei die Kalandrierdrücke der einzelnen Kalanderschritte stufenweise zunehmen und die Kalandriergeschwindigkeiten der einzelnen Kalanderschritte stufenweise abnehmen.

17. Herstellungsverfahren gemäß einem der Ansprüche 5 bis 16, wobei das Lösungsmittel beim Kalandern vollständig aus dem Material ausgetrieben wird.

18. Herstellungsverfahren gemäß einem der Ansprüche 5 bis 17, wobei das Bereitstellen einer Stoffmischung umfasst:
Hinzufügen eines Vernetzungsmittels, wobei die Vernetzung während des anschließenden Kalanderns durch diaminische, peroxidische oder bisphenolische Vernetzung erfolgt und das Vernetzungsmittel dabei vollständig umgesetzt wird.

19. Herstellungsverfahren gemäß einem der Ansprüche 5 bis 18, wobei die Ausrichtung der Fasern in der homogene Weichstoffdichtungsausgangsmasse zufallsverteilt ist und die Fasern nicht verknüpft sind.

20. Weichstoffdichtung, hergestellt durch ein Verfahren gemäß einem der Ansprüche 5 bis 19.
